# EUROPEAN PATENT APPLICATION

(11) **EP 3 982 020 A1**
(43) Date of publication of application: **13.04.2022**
(21) Application number: 21275134.1
(22) Date of filing: 24.09.2021
(51) Int. Cl.: F16K 17/00, F16K 17/04, F16K 17/06, F16K 17/38, F17C 13/04, G01K 5/44, G05D 23/02, F03G 7/06

(54) **PRESSURE AND TEMPERATURE SAFETY VALVES**

(30) Priority: 06.10.2020 GB 202015818
(71) Applicant: Seetru Limited, Bristol BS1 6UT (GB)
(72) Inventor: PIPPEN, Andrew, Bristol, BS1 6UT (GB); WITT, William, Bristol, BS1 6UT (GB)
(74) Representative: Barker Brettell LLP

(57) **Abstract**

A pressure and temperature valve comprising a pressure relief valve (100) and a temperature probe (200). The pressure relief valve comprises a valve seat (14) and a valve member (20) arranged to rest in contact with the valve seat to close the valve and to be lifted off the valve seat to open the valve. The temperature probe (200) comprises a housing (52), a volume of expansion material (62) within the housing, a piston (64) slidable within the housing and arranged to be moved in a first direction by expansion of the expansion material, and in a second direction opposite to the first direction on contraction of the expansion material. A lift rod (90) is arranged to be moved by movement of the piston (64) in the first direction thereby to move the valve member (20) to open the valve.

## Description

### FIELD OF THE INVENTION

This invention concerns improvements in or relating to pressure and temperature safety valves, and in particular to the temperature sensing probes of such safety valves.

### BACKGROUND TO THE INVENTION

Pressure and Temperature (P&T) valves are safety valves that are arranged to release pressure from pressurised systems in the event of over-pressurisation or over-heating, or both. Such valves are used, for example, to protect pressurised hot water systems, typically involving a boiler. These systems are used for the hot water supplies in large buildings: office blocks, schools, hospitals etc. The valve is arranged to open to release pressure from, or protect from potential over-pressurisation of, the pressurised hot water system if: the pressure rises above the pre-defined set pressure of the valve, or; the temperate of the hot water increases above the pre-defined temperature; or both.

This application is widely occurring, and such combined Pressure and Temperature valves are well established and generally operate in the same manner, including a spring-loaded pressure relief valve and a temperature probe that uses material with high thermal expansion to open the relief valve in the event of high temperature being reached. It is a problem with such valves that the temperature probe does not assure repeatable precision.

### SUMMARY TO THE INVENTION

The present invention provides a pressure and temperature valve comprising a pressure relief valve and a temperature probe, wherein the pressure relief valve comprises a valve seat and a valve member arranged to rest in contact with the valve seat to close the valve and to be lifted off the valve seat to open the valve, and the temperature probe comprises a housing, a volume of expansion material within the housing, a piston slidable within the housing and arranged to be moved in a first direction by expansion of the expansion material, and in a second direction opposite to the first direction on contraction of the expansion material, and a lift rod arranged to be moved by movement of the piston in the first direction thereby to move the valve member to open the valve.

The temperature probe may further comprise a lift stop arranged to limit movement of the piston in the first direction. The lift stop may comprise a lift stop surface located within the housing, for example forming an internal surface of the housing, which may be on an end wall of the housing. The piston may comprise a surface arranged to contact the lift stop surface at the limit of travel of the piston in the first direction.

The temperature probe may comprise a cold stop arranged to limit movement of the piston in the second direction, on contraction of the expansion material. The cold stop may comprise a cold stop surface located within the housing, for example formed on a shoulder within the housing. The piston may comprise a surface arranged to contact the cold stop surface at the limit of its travel in the second direction.

The valve may further comprise an elastomeric ball located between the expansion material and the piston so as to form a seal therebetween preventing escape of the expansion material past the piston. The valve may further comprise a sealing disc located between the elastomeric ball and the piston and arranged to prevent extrusion of the elastomeric ball between the piston and the housing.

The valve may further comprise a return spring arranged to bias the piston in the second direction.

The valve may further comprise any one or more features, in any combination, of the preferred embodiments of the invention which will now be described by way of example only with reference to the accompanying drawings.

### BRIEF DESCRIPTION OF THE DRAWINGS

**Figure 1** shows a section through a pressure and temperature safety valve according to an embodiment of the present invention; and

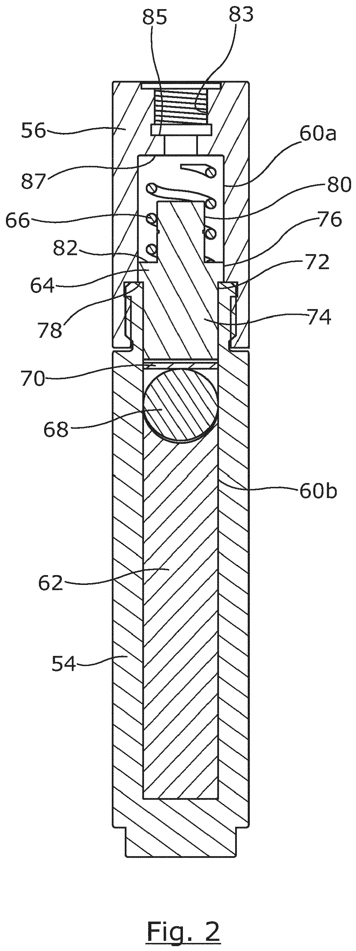

**Figure 2** shows an enlarged section through the temperature probe of the valve of Figure 1.

### DESCRIPTION OF THE PREFERRED EMBODIMENTS

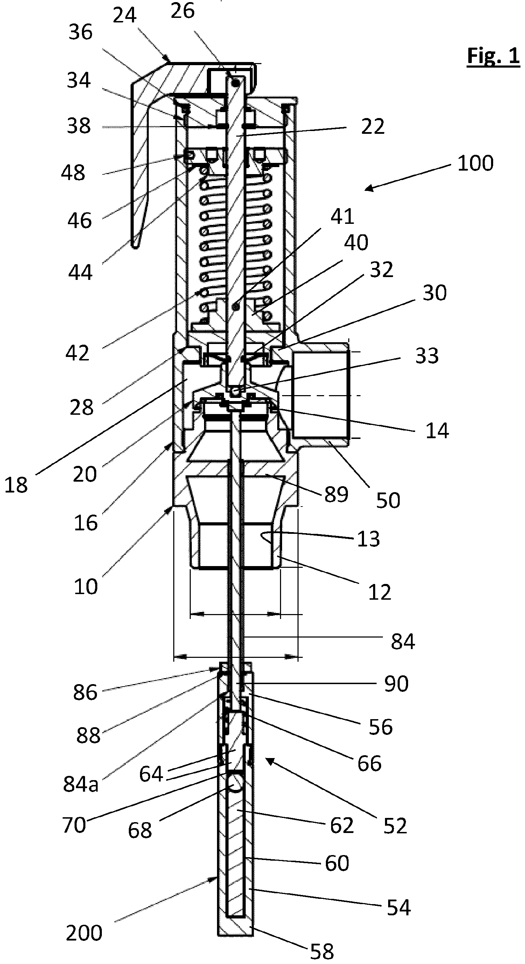

Referring to Figure 1, a pressure and temperature valve assembly comprises a pressure relief valve 100 with a temperature probe 200 connected to it and arranged to open the valve if it detects a high temperature. The pressure relief valve 100 comprises a valve seat component 10 which is very generally cylindrical and includes a threaded connector 12 at its lower end, which forms a valve inlet 13, for connecting to the pressurised system and a valve seat 14 at its upper end, and a main body component 16, the lower end of which is connected to the valve seat component 10. The connection may be below the valve seat 14 so that the seat 14 is enclosed within a main chamber 18 defined by the lower end of the main body component 16, or the valve seat component 10 may have a wall extending upwards around the valve seat 14. A valve member, in the form of a valve disc 20, rests on the seat 14 to close the valve, and is connected to the bottom end of a valve spindle 22. The spindle 22 extends upwards through the upper part of the main body component with its top end connected to a lever 24 by means of a lock pin 26.

A spindle bearing 28 is a disc shaped component having a central aperture through which the spindle 22 extends and rests on a shoulder 30 projecting inwards from the outer wall of the main body component 16. An annular elastomeric membrane 32 has its outer edge retained in a downwardly extending annular wall of the spindle bearing 28 and its inner edge sealed around the spindle 22 just above the valve disc 20. This allows the spindle to move vertically through the spindle bearing 28, together with the valve disc 20 which pushes up on the spindle 22 to open the valve, and can rock on the end of the spindle, because the contact is through a ball bearing 33, allowing good sealing of the valve disc 20 on the seat 14. A cap 34 closes the top end of the main body component 16 and is sealed into it by an O-ring 36. The upper end of the spindle 22 extends through an aperture in the cap 34 and can slide vertically through the cap 34. An E-clip 38 is clipped to the spindle and the aperture through the cap 34 has an enlarged lower part which allows the E-clip to move vertically within it relative to the cap 34.

A lower spring support 40 extends around the spindle and is fixed to it by a pin 41. The lower spring support 40 rests on the upper surface of the spindle bearing 28, and has an annular upward facing surface against which the valve spring 42 acts. The upper end of the spring 42 is located against an adjuster 44 which is a disc-like member with an annular downward facing surface against which the upper end of the spring rests, separated from it by a skid washer 46. The adjuster 44 can slide vertically within the main body component 16, and a locking slug 48 releasably locks the adjuster 44 against the main body component 16 so that the vertical position of the adjuster can be adjusted and then fixed, thereby to adjust the pressure required to open the valve.

The main body component 16 also defines an outlet port 50 allowing gas to escape from the main chamber 18 when the valve is open.

The temperature probe 200 comprises a housing 52 formed from a lower housing 54 and an upper housing 56. The lower housing is substantially cylindrical with a closed lower end 58. The upper housing 56 is also substantially cylindrical and joined to the upper end of the lower housing 54. The housing 52 defines an expansion chamber 60 within it, the lower part of which is filled with thermal expansion material 62, such as a highly crystalline wax, having a high coefficient of thermal expansion. A piston 64 is located in the upper part of the chamber 60. The piston 64 is slidable vertically within the expansion chamber 60. A return spring 66 is located within the expansion chamber above the piston 64 and has its upper end in contact with the upper end of the expansion chamber 60 and its lower end in contact with the piston 64. The return spring 66 therefore exerts a downward return force on the piston 64. An elastomeric ball 68 is located within the expansion chamber 60 between the expansion material 62 and the piston 64, and a sealing disc 70, for example of PTFE, is located within the expansion chamber between the ball 68 and the piston 64. The elastomeric ball 68 is a sliding fit in the expansion chamber 60 and forms a seal between the expansion material 62 and the piston 64, preventing escape of the expansion material into the gap between the piston 64 and the housing 52. The sealing disc 70 is also a sliding fit within the expansion chamber 60 and being softer than the piston 64 can be a tighter fit within the housing 52 so that it prevents the elastomeric ball 68 from being extruded into the small gap between the side of the piston 64 and the wall of the expansion chamber 60. The top surface of the expansion material 62 is formed as a hemispherical recess so as to fit closely against the underside of the elastomeric ball 68 and reduce the trapping of air between the expansion material 62 and the ball 68. The volume of expansion material 62 is selected such that, at normal operating temperature, the sealing disc 70, which rests on the top of the elastomeric ball 68, is just clear of the underside of the piston 64.

The upper part 60a of the expansion chamber 60 that is formed within the upper housing 56 is of a slightly greater diameter than the lower part 60b that is formed within the lower housing 54. An upward facing shoulder 72 between the upper and lower parts of the expansion chamber 60 is formed by the top end of the lower housing 54. The piston 64 has a lower part 74 which is a sliding fit in the lower part 60b of the expansion chamber, and above that a wider central part 76 that is a sliding fit in the upper part 60a of the expansion chamber. The shoulder 78 between the lower 74 and central 76 parts of the piston is arranged to contact the shoulder 72 between the two parts 60a, 60b of the expansion chamber to limit downward movement of the piston and define its lowermost position. The piston 64 also has an upper part 80 which is of smaller diameter than the central part 76 so that an upward facing shoulder 82 is formed between them. The bottom of the helical return spring 66 rests on the shoulder 82, and the upper part 80 of the piston extends upwards inside the coils of the return spring 66.

The temperature probe is 200 is connected to the vale 100 by means of a lift rod tube 84 which has its lower end 84a secured in a bore 83 in the top of the upper housing 56 by means of a lock nut 86. The bore 83 narrows at its lower end so that a shoulder 85 is formed against which the bottom end of the lift rod tube 84 locates. The bottom end of the bore 83, where it opens into the upper end of the expansion chamber 60, is narrower than the upper part 80 of the piston 64, so that the end wall 87 at the top of the expansion chamber forms a stop that limits upward movement of the piston 64. An O-ring 88 below the lock nut 86 forms a seal between the lift rod tube 84 and the upper housing 56 of the temperature probe thereby sealing the expansion cavity and the internal components of the probe. The top end of the lift rod tube 84 is supported within the valve seat component 10 of the valve by a support beam 89, extending across the valve inlet 13, so that the lift rod tube 84 is aligned with the valve spindle 22. A lift rod 90 extends through the lift rod tube 84 with its lower end extending down into the expansion chamber 60 and resting on the top of the piston 64 and its upper end arranged to contact the underside of the valve disc 20. The length of the lift rod 90 is such that, when the valve is closed, with the valve disc 20 in its lowermost position resting on the valve seat 14, and the piston 64 in its lowermost position, the bottom end of the lift rod 90 rests on the top of the piston 64 and the top of the lift rod 90 is clear of the underside of the valve disc 20. This ensures that the lifting rod 90 does not interfere with the normal operation of the pressure release valve 100.

In operation, the connector 12 is connected to a pressure vessel so that the temperature probe 200 extends into the pressure vessel. The pressure release valve operates conventionally: the valve spring 42 holds the valve disc 20 down on the valve seat 14 keeping the valve closed until the pressure in the vessel increases beyond the set pressure of the valve at which point that pressure lifts the valve disc 20 off the valve seat 14 and pressurized gas flows through the valve inlet 13, past the valve disc 20 and out through the outlet 50.

If the temperature within the vessel increases the expansion material 62 in the temperature probe 200 expands. The initial expansion is taken up by the upward movement of the elastomeric ball 68, which seals the expansion material within the volume below the ball 68, until it compresses the sealing disc 70 against the piston 64. Further expansion is taken up by a combination of compression of the elastomeric ball 68, which increases the sealing effect of the ball, movement of the piston 64 into contact with the lift rod 90, and movement of the lift rod 90 into contact with the valve disc 20. Further expansion causes lifting of the valve disc 20 off the valve seat 14 opening the valve. Upward movement of the piston, and hence of the valve seat, is limited by contact of the top end of the piston 64 with the end wall 87 which forms an upper limit stop at the top of the expansion chamber.

When the temperature falls again and the expansion material 62 contracts again, the valve spring 42 first pushes the valve disc 20 downwards to close the valve. Then the return spring 66 pushes the piston 64 downwards, allowing the lift rod 90 to fall back down with it, until the shoulder 78 on the piston 64 contacts the shoulder 72 on the probe housing which forms a lower stop. Further contraction moves the top surface of the expansion material 62 away from the piston 64, which may bring the elastomeric ball 68 and the sealing disc 70 with it.

The length of the column of expansion material 62 is relatively high. For example the length of the column, which may be defined as the distance bottom of the elastomeric ball 68 in its non-compressed state and the bottom of the expansion chamber 60, may be at least three times, or at least four times, its diameter, or its maximum diameter if it is not of perfectly circular cross section. This ensures that the expansion material 62 can easily move the piston 64 between its two limits of travel defined by the upper and lower end stops 87, 72. The provision of the ends stops at the top and bottom of the travel of the piston 64 ensures that the operation of the temperature probe is repeatable with high precision, because the gap between the top of the lift rod 90 and the valve disc 20, when the valve is closed and the piston is in its lowest position, can be relatively small. It also means that even with a relatively long column of expansion material, the valve will not be damaged by over-lifting of the valve disc 20.

## Claims

1. A pressure and temperature valve comprising a pressure relief valve and a temperature probe, wherein the pressure relief valve comprises a valve seat and a valve member arranged to rest in contact with the valve seat to close the valve and to be lifted off the valve seat to open the valve, and the temperature probe comprises a housing, a volume of expansion material within the housing, a piston slidable within the housing and arranged to be moved in a first direction by expansion of the expansion material, and in a second direction opposite to the first direction on contraction of the expansion material, and a lift rod arranged to be moved by movement of the piston in the first direction thereby to move the valve member to open the valve.

2. A valve according to claim 1 wherein the temperature probe further comprises a lift stop arranged to limit movement of the piston in the first direction.

3. A valve according to claim 2 wherein the lift stop comprises a lift stop surface located within the housing.

4. A valve according to claim 3 wherein the piston comprises a surface arranged to contact the lift stop surface at the limit of travel of the piston in the first direction.

5. A valve according to any preceding claim wherein the temperature probe comprises a cold stop arranged to limit movement of the piston in the second direction, on contraction of the expansion material.

6. A valve according to claim 5 wherein the cold stop comprises a cold stop surface located within the housing.

7. A valve according to claim 6 wherein the piston comprises a surface arranged to contact the cold stop surface at the limit of its travel in the second direction.

8. A valve according to any preceding claim further comprising an elastomeric ball located between the expansion material and the piston so as to form a seal therebetween preventing escape of the expansion material past the piston.

9. A valve according to claim 8 further comprising a sealing disc located between the elastomeric ball and the piston and arranged to prevent extrusion of the elastomeric ball between the piston and the housing.

10. A valve according to any preceding claim further comprising a return spring arranged to bias the piston in the second direction.
